# EUROPEAN PATENT SPECIFICATION

(11) **EP 3 012 989 B1**
(45) Date of publication and mention of the grant of the patent: **30.05.2018**
(21) Application number: 14813750.8
(22) Date of filing: 13.06.2014
(51) Int. Cl.: H04L 1/00, H04L 1/18, H04W 72/14, H04L 1/16, H04L 5/00

(54) **DATA TRANSMISSION METHOD AND SYSTEM, BASE STATION AND USER EQUIPMENT**
DATENÜBERTRAGUNGSVERFAHREN UND SYSTEM, BASISSTATION UND BENUTZERVORRICHTUNG
PROCÉDÉ ET SYSTÈME DE TRANSMISSION DE DONNÉES, STATION DE BASE ET ÉQUIPEMENT D'UTILISATEUR

(30) Priority: 17.06.2013 CN 201310239437
(43) Date of publication of application: 27.04.2016
(73) Proprietor: Huawei Technologies Co., Ltd., Longgang District Shenzhen, Guangdong 518129 (CN)
(72) Inventor: YANG, Haijuan, Shenzhen Guangdong 518129 (CN); PENG, Jingbo, Shenzhen Guangdong 518129 (CN); XU, Jiancheng, Shenzhen Guangdong 518129 (CN)
(74) Representative: Gill Jennings & Every LLP
(86) International application number: PCT/CN2014/079851
(87) International publication number: WO 2014/201976

(56) References cited:
- EP-A1- 2 268 088
- WO-A2-2011/053970
- CN-A- 101 971 678
- CN-A- 102 595 476
- CN-A- 102 763 449
- CN-A- 103 354 482
- US-A1- 2009 238 121

## Description

### TECHNICAL FIELD

The present invention relates to the field of communications technologies, and in particular, to a data transmission method and system, a base station, and user equipment.

### BACKGROUND

In a radio communications system, a base station allocates, in a specific symbol of each subframe, a physical hybrid automatic repeat request indicator channel (Physical Hybrid-ARQ Indicator Channel, PHICH) resource for each user equipment, and feeds back, to the user equipment by using the resource, positive acknowledgment (ACKnowledge, ACK) information or negative acknowledgment (Negative ACKnowledgment, NACK) information, for uplink transmission data, of the base station. In this way, the user equipment can find a time-frequency resource that carries a PHICH, and demodulates the time-frequency resource to obtain PHICH information. If the PHICH information obtained by demodulation is ACK information, the user equipment discards uplink transmission data, of the first four timeslots, saved in a buffer. If the PHICH information obtained by demodulation is NACK information, the user equipment retransmits the uplink transmission data.

In the prior art, if time frequencies of two cells of a base station are aligned, PHICH information receiving by user equipment in one cell of the two cells may be interfered by a signal, transmitted by the base station, in the other cell, which reduces a correct receiving rate of the user equipment and affects normal data sending of the user equipment.

EP 2 268 088 relates to base station device and communication control method. WO 2011/053970 relates to channel status reporting.

### SUMMARY

Embodiments of the present invention provides a data transmission method and system, a base station, and user equipment, which reduce interference, between cells, with uplink transmission data sending of user equipment.

A first aspect of the embodiments of the present invention provides a data transmission method, including:
receiving, by a base station, uplink transmission data sent by user equipment;
determining, by the base station, acknowledgment information for the uplink transmission data; and
when the acknowledgment information for the uplink transmission data is positive acknowledgment information, when a downlink transmission time interval arrives, sending, by the base station, the positive acknowledgment information and uplink scheduling resource information to the user equipment, where
the uplink scheduling resource information includes first instruction information, which is used to instruct the user equipment to send, on a reserved resource of an uplink scheduling resource, channel quality indicator measurement information.

In a first possible implementation manner of the first aspect of the embodiments of the present invention,
the uplink scheduling resource information further includes second instruction information, which is used to instruct the user equipment to perform new uplink transmission, so that the user equipment discards the uplink transmission data according to the second instruction information.

With reference to the first aspect or the first possible implementation manner of the first aspect of the embodiments of the present invention, in a second possible implementation manner of the first aspect of the embodiments of the present invention, the positive acknowledgment information is carried on a physical hybrid automatic repeat request indicator channel (PHICH), and the uplink scheduling resource information is carried in uplink grant information of a physical downlink control channel (PDCCH).

With reference to any one of the first aspect and the first and second possible implementation manners of the first aspect of the embodiments of the present invention, in a third possible implementation manner of the first aspect of the embodiments of the present invention, the reserved resource is on an edge of a frequency band occupied by a physical uplink shared channel (PUSCH).

With reference to any one of the first aspect and the first to third possible implementation manners of the first aspect of the embodiments of the present invention, in a fourth possible implementation manner of the first aspect of the embodiments of the present invention, the reserved resource occupies one resource block.

With reference to any one of the first aspect and the first to fourth possible implementation manners of the first aspect of the embodiments of the present invention, in a fifth possible implementation manner of the first aspect of the embodiments of the present invention, the reserved resource is the same for different user equipments.

A second aspect of the embodiments of the present invention provides a data transmission method, including:
sending, by user equipment, uplink transmission data to a base station;
receiving, by the user equipment, acknowledgment information, which is for the uplink transmission data, and uplink scheduling resource information that are sent by the base station, where the acknowledgment information is positive acknowledgment information sent by the base station, and is parsed by the user equipment into positive acknowledgment information or negative acknowledgment information, and the uplink scheduling resource information includes first instruction information, which is used to instruct the user equipment to send, on a reserved resource of an uplink scheduling resource, channel quality indicator measurement information; and
when an uplink transmission time interval of the user equipment arrives, sending, on the reserved resource, the channel quality indicator measurement information according to the first instruction information.

In a first possible implementation manner of the second aspect of the embodiments of the present invention, the uplink scheduling resource information further includes second instruction information, which is used to instruct the user equipment to perform new uplink transmission, and the method further includes:
discarding the uplink transmission data according to the second instruction information.

With reference to the second aspect or the first possible implementation manner of the second aspect of the embodiments of the present invention, in a second possible implementation manner of the second aspect of the embodiments of the present invention, the acknowledgment information is carried on a physical hybrid automatic repeat request indicator channel (PHICH), and the uplink scheduling resource information is carried in uplink grant information of a physical downlink control channel (PDCCH).

With reference to any one of the second aspect and the first and second possible implementation manners of the second aspect of the embodiments of the present invention, in a third possible implementation manner of the second aspect of the embodiments of the present invention, the reserved resource is on an edge of a frequency band occupied by a physical uplink shared channel (PUSCH).

With reference to any one of the second aspect and the first to third possible implementation manner of the second aspect of the embodiments of the present invention, in a fourth possible implementation manner of the second aspect of the embodiments of the present invention, the reserved resource occupies one resource block.

With reference to any one of the second aspect and the first to fourth possible implementation manners of the second aspect of the embodiments of the present invention, in a fifth possible implementation manner of the second aspect of the embodiments of the present invention, the reserved resource is the same for different user equipments.

A third aspect of the embodiments of the present invention provides a base station, including:
an uplink receiving unit, configured to receive uplink transmission data sent by user equipment;
an acknowledgment determining unit, configured to determine acknowledgment information, for the uplink transmission data, of the uplink receiving unit; and
a positive returning unit, configured to: when the acknowledgment determining unit determines that the acknowledgment information for the uplink transmission data is positive acknowledgment information, when a downlink transmission time interval arrives, send the positive acknowledgment information and uplink scheduling resource information to the user equipment, where
the uplink scheduling resource information includes first instruction information, which is used to instruct the user equipment to send, on a reserved resource of an uplink scheduling resource, channel quality indicator measurement information.

In a first possible implementation manner of the third aspect of the embodiments of the present invention,
the uplink scheduling resource information further includes second instruction information, which is used to instruct the user equipment to perform new uplink transmission, so that the user equipment discards the uplink transmission data according to the second instruction information.

With reference to the third aspect or the first possible implementation manner of the third aspect of the embodiments of the present invention, in a second possible implementation manner of the third aspect of the embodiments of the present invention, the positive returning unit is configured to: add the positive acknowledgment information on a physical hybrid automatic repeat request indicator channel (PHICH) and send the positive acknowledgment information to the user equipment; and add the uplink scheduling resource information to uplink grant information of a physical downlink control channel (PDCCH) and send the uplink scheduling resource information to the user equipment.

With reference to any one of the third aspect and the first and second possible implementation manners of the third aspect of the embodiments of the present invention, in a third possible implementation manner of the third aspect of the embodiments of the present invention, the reserved resource is on an edge of a frequency band occupied by a physical uplink shared channel (PUSCH).

With reference to any one of the third aspect and the first to third possible implementation manners of the third aspect of the embodiments of the present invention, in a fourth possible implementation manner of the third aspect of the embodiments of the present invention, the reserved resource occupies one resource block.

With reference to any one of the third aspect and the first to fourth possible implementation manners of the third aspect of the embodiments of the present invention, in a fifth possible implementation manner of the third aspect of the embodiments of the present invention, the reserved resource is the same for different user equipments.

A fourth aspect of the embodiments of the present invention provides user equipment, including:
an uplink sending unit, configured to send uplink transmission data to a base station;
a positive receiving unit, configured to receive acknowledgment information, which is for the uplink transmission data, and uplink scheduling resource information that are sent by the base station, where the acknowledgment information is positive acknowledgment information sent by the base station, and is parsed by the user equipment into positive acknowledgment information or negative acknowledgment information, and the uplink scheduling resource information includes first instruction information, which is used to instruct the user equipment to send, on a reserved resource of an uplink scheduling resource, channel quality indicator measurement information; and
a positive operation unit, configured to: when an uplink transmission time interval of the user equipment arrives, send, on the reserved resource, the channel quality indicator measurement information according to the first instruction information in the uplink scheduling resource information of the positive receiving unit.

In a first possible implementation manner of the fourth aspect of the embodiments of the present invention, the uplink scheduling resource information further includes second instruction information, which is used to instruct the user equipment to perform new uplink transmission, and the user equipment includes:
a discarding unit, configured to discard the uplink transmission data according to the second instruction information.

With reference to the fourth aspect or the first possible implementation manner of the fourth aspect of the embodiments of the present invention, in a second possible implementation manner of the fourth aspect of the embodiments of the present invention, the acknowledgment information is carried on a physical hybrid automatic repeat request indicator channel (PHICH), and the uplink scheduling resource information is carried in uplink grant information of a physical downlink control channel (PDCCH).

With reference to any one of the fourth aspect and the first and second possible implementation manners of the fourth aspect of the embodiments of the present invention, in a third possible implementation manner of the fourth aspect of the embodiments of the present invention, the reserved resource is on an edge of a frequency band occupied by a physical uplink shared channel (PUSCH).

With reference to any one of the fourth aspect and the first to third possible implementation manners of the fourth aspect of the embodiments of the present invention, in a fourth possible implementation manner of the fourth aspect of the embodiments of the present invention, the reserved resource occupies one resource block.

With reference to any one of the fourth aspect and the first to fourth possible implementation manners of the fourth aspect of the embodiments of the present invention, in a fifth possible implementation manner of the fourth aspect of the embodiments of the present invention, the reserved resource is the same for different user equipments.

A fifth aspect of the embodiments of the present invention provides a data transmission system, including:
the base station according to the third aspect or any possible implementation manner of the third aspect of the embodiments of the present invention, and the user equipment according to the fourth aspect or any possible implementation manner of the fourth aspect of the embodiments of the present invention.

In the embodiments of the present invention, after receiving uplink transmission data sent by user equipment, a base station determines acknowledgment information for the uplink transmission data; and if the acknowledgment information for the uplink transmission data is positive acknowledgment information, when a downlink transmission time interval of the base station arrives, sends the positive acknowledgment information and uplink scheduling resource information to the user equipment, where the uplink scheduling resource information includes first instruction information, which is used to instruct the user equipment to send, on a reserved resource of an uplink scheduling resource, channel quality indicator measurement information. In this way, if the user equipment obtains, by incorrect demodulation, negative acknowledgment information instead of the positive acknowledgment information, the user equipment sends, on the reserved resource, the CQI measurement information according to the first instruction information, but does not retransmit the uplink transmission data, which reduces interference caused to uplink transmission data sending of user equipment in another cell, and improves efficiency of normal data sending of the user equipment.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a data transmission method executed on a base station side according to an embodiment of the present invention;
FIG. 2 is a flowchart of another data transmission method executed on a base station side according to an embodiment of the present invention;
FIG. 3 is a flowchart of a data transmission method executed on a user equipment side according to an embodiment of the present invention;
FIG. 4 is a flowchart of another data transmission method executed on a user equipment side according to an embodiment of the present invention;
FIG. 5 is a schematic diagram of a data transmission method according to an application embodiment of the present invention;
FIG. 6 is a schematic structural diagram of a base station according to an embodiment of the present invention;
FIG. 7 is a schematic structural diagram of another base station according to an embodiment of the present invention;
FIG. 8 is a schematic structural diagram of user equipment according to an embodiment of the present invention;
FIG. 9 is a schematic structural diagram of another user equipment according to an embodiment of the present invention; and
FIG. 10 is a schematic structural diagram of another user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

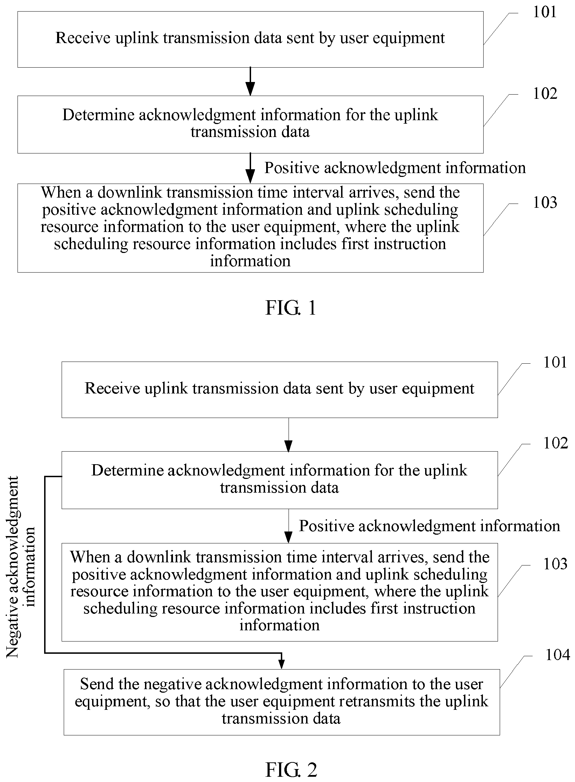

An embodiment of the present invention provides a data transmission method, which is mainly used in a radio communications system. The method in this embodiment is a method executed by a base station, and a flowchart is shown in FIG. 1, including the following steps:
Step 101: Receive uplink transmission data sent by user equipment.
Step 102: Determine acknowledgment information for the uplink transmission data; if the base station can correctly receive and parse the foregoing uplink transmission data, the determined acknowledgment information is positive acknowledgment information; if the base station cannot correctly receive and parse the uplink transmission data, the determined acknowledgment information is negative acknowledgment information.
Step 103: If the acknowledgment information, for the uplink transmission data, determined in step 102 is positive acknowledgment information, when a downlink transmission time interval (Transmission Time Interval, TTI) of the base station arrives, the base station sends the positive acknowledgment information and uplink scheduling resource information to the user equipment, where the uplink scheduling resource information includes first instruction information, where the first instruction information is used to instruct the user equipment to send, on a reserved resource of an uplink scheduling resource, channel quality indicator (Channel Quality Indicator, CQI) measurement information.

The base station may add the positive acknowledgment information on a PHICH, add the first instruction information on a physical downlink control channel (Physical Downlink Control Channel, PDCCH), and send the information on the PHICH and the PDCCH to the user equipment at the arrived downlink TTI. Specifically, a request for sending only a CQI is carried on the PDCCH, and a CQI request field (request field) in the request is set to 1, which indicates that the request is used only for sending the CQI measurement information. In addition, the signaling includes a reserved resource allocated for the user equipment, where the reserved resource may be allocated in a form of a resource block (Resource Block, RB), and a size and a location of the reserved resource may be determined by the base station according to an actual requirement of the user equipment. To minimize impact on a physical uplink shared channel (Physical Uplink Shared Channel, PUSCH) used when the user equipment sends the uplink transmission data, generally, the reserved resource is on an edge of a frequency band occupied by the PUSCH and only occupies at least one RB (for example, the 0th RB), and a same reserved resource may be allocated for different user equipments.

After the base station sends the positive acknowledgment information and the uplink scheduling resource information, the user equipment receives and demodulates the information on the PHICH and the PDCCH at the downlink TTI. If the user equipment incorrectly demodulates the information on the PHICH into negative acknowledgment information and the user equipment obtains, by demodulation, the first instruction information of the PDCCH, the user equipment does not retransmit the uplink transmission data, but sends, on the reserved resource indicated by the first instruction information, the CQI measurement information, which does not interfere with uplink transmission data sending of user equipment in another cell. In addition, the base station does not decode, on the reserved resource, received data corresponding to the user equipment. In this way, the CQI measurement information sent by the user equipment is not interfered. Because a demodulation threshold for the information on the PDCCH is less than a demodulation threshold for the information on the PHICH and there are more performance ensuring algorithms for the information on the PDCCH, it is easier for the user equipment to correctly demodulate the information on the PDCCH, which effectively solves a problem that uplink transmission data sending of another user equipment is interfered when the user equipment obtains, by incorrect demodulation, negative acknowledgment information instead of the positive acknowledgment information on the PHICH.

Further, the PDCCH may carry information such as the first instruction information, and the PDCCH may further carry second instruction information, where the second instruction information is used to instruct the user equipment to perform new uplink transmission. Specifically, the base station may add new uplink grant (UL-Grant) information on the PDCCH, and invert a new data indicator (New Data Indicator, NDI) value in the uplink grant information (for example, the value is changed from 0 to 1, or from 1 to 0), so as to instruct the user, by inverting the NDI value, to perform new uplink transmission. In this way, the user equipment discards the uplink transmission data in step 101 according to the second instruction information, which further prevents retransmission of the uplink transmission data.

It should be noted that the base station may add both the first instruction information and the second instruction information to the UL-Grant information of the PDCCH. Because the existing UL-Grant information already includes an NDI information element and a CQI request information element, the base station may send the uplink scheduling resource information to the user equipment by directly delivering the UL-Grant information that requests the user equipment to report a CQI, without modifying a message format of an existing protocol, so that the method in this embodiment of the present invention can be implemented by means of minor modification.

It may be learned that in this embodiment of the present invention, after receiving uplink transmission data sent by user equipment, a base station determines acknowledgment information for the uplink transmission data; and if the acknowledgment information for the uplink transmission data is positive acknowledgment information, when a downlink transmission time interval of the base station arrives, sends the positive acknowledgment information and uplink scheduling resource information to the user equipment, where the uplink scheduling resource information includes first instruction information, which is used to instruct the user equipment to send, on a reserved resource of an uplink scheduling resource, channel quality indicator measurement information. In this way, if the user equipment obtains, by incorrect demodulation, negative acknowledgment information instead of the positive acknowledgment information, the user equipment sends, on the reserved resource, the CQI measurement information according to the first instruction information, but does not retransmit the uplink transmission data, which reduces interference caused to uplink transmission data sending of user equipment in another cell, and improves efficiency of normal data sending of the user equipment.

It should be noted that a method used if the base station determines that the acknowledgment information for the uplink transmission data is positive acknowledgment information is described in step 101 to step 103 in the foregoing embodiment. In another specific embodiment, referring to FIG. 2, if it is determined that the acknowledgment information for the uplink transmission data is negative acknowledgment information in step 102, the base station performs step 104, that is, when the downlink transmission time interval of the base station arrives, sends the negative acknowledgment information to the user equipment over a PHICH, so that the user equipment retransmits the uplink transmission data. If the user equipment obtains, by incorrect demodulation, positive acknowledgment information instead of the negative acknowledgment information, the user equipment does not retransmit the uplink transmission data; however, because the base station does not send the second instruction information, the user equipment does not discard the foregoing uplink transmission data either, and the user equipment may retransmit the uplink transmission data at a subsequent uplink TTI.

In addition, in this embodiment, the base station considers that the user equipment retransmits the uplink transmission data when an uplink transmission time interval arrives. Therefore, the base station can perform configuration that another user equipment does not send uplink transmission data at a retransmission TTI of the user equipment, and sends the configuration to the another user equipment over the PDCCH, which can also avoid causing interference.

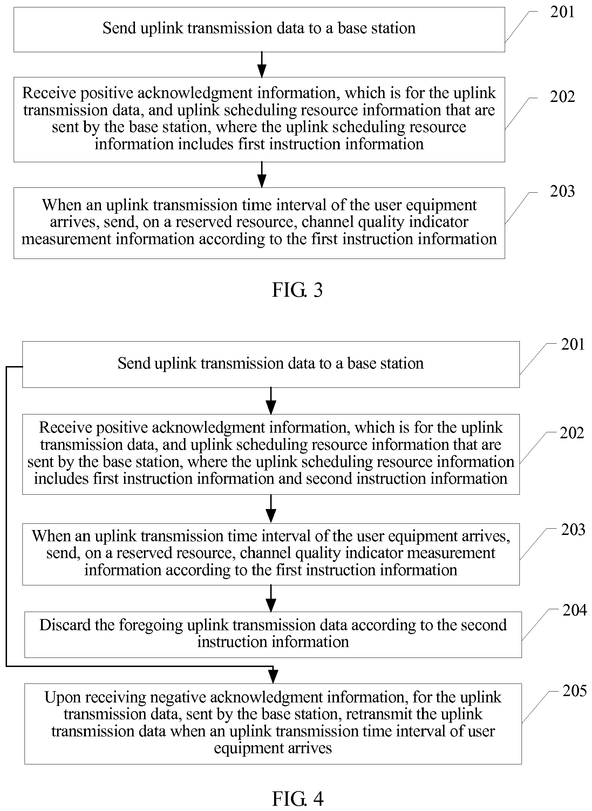

An embodiment of the present invention further provides another data transmission method, which is mainly used in a radio communications system. The method in this embodiment is a method executed by user equipment, and a flowchart is shown in FIG. 3, including the following steps:
Step 201: Send uplink transmission data to a base station.
Step 202: When a downlink transmission time interval of the base station arrives, receive positive acknowledgment information, which is for the uplink transmission data, and uplink scheduling resource information that are sent by the base station, where the uplink scheduling resource information includes first instruction information, which is used to instruct the user equipment to send, on a reserved resource of an uplink scheduling resource, channel quality indicator measurement information.

In this embodiment, the base station adds the positive acknowledgment information on a PHICH; and adds uplink scheduling resource information including the first instruction information on a PDCCH and sends the uplink scheduling resource information to the user equipment. When the user equipment performs the steps, when the downlink transmission time interval of the base station arrives, the user equipment receives information on the PHICH and obtains the positive acknowledgment information by demodulation, and receives information on the PDCCH and obtains the uplink scheduling resource information by demodulation.

Step 203: When an uplink transmission time interval of the user equipment arrives, send, on the reserved resource, the channel quality indicator measurement information according to the first instruction information. In this way, even if the user equipment obtains, by incorrect demodulation, negative acknowledgment information instead of the positive acknowledgment information, the user equipment does not retransmit the forgoing uplink transmission data when the uplink transmission time interval arrives, and therefore, no interference is caused to uplink transmission data sending of another user equipment.

It may be learned that in this embodiment of the present invention, user equipment sends uplink transmission data to a base station; when a downlink transmission time interval of the base station arrives, upon receiving positive acknowledgment information, which is for the uplink transmission data, and uplink scheduling resource information that are sent by the base station, the user equipment sends, on a reserved resource when an uplink transmission time interval of the user equipment arrives, channel quality indicator measurement information according to first instruction information included in the uplink scheduling resource information. In this way, if the user equipment obtains, by incorrect demodulation, negative acknowledgment information instead of the positive acknowledgment information, the user equipment sends, only on the reserved resource, the CQI measurement information according to the first instruction information, but does not retransmit the uplink transmission data, which reduces interference caused to uplink transmission data sending of user equipment in another cell, and improves efficiency of normal data sending of the user equipment.

It should be noted that, referring to FIG. 4, in a specific embodiment, the uplink scheduling resource information sent by the base station to the user equipment over the PDCCH may not only include the first instruction information, but also include second instruction information, where the second instruction information is used to instruct the user equipment to perform new uplink transmission. Specifically, the second instruction information and the foregoing first instruction information may be carried in uplink grant information of the PDDCH, and in addition to performing step 201 to step 203, the user equipment may further perform step 204, that is, discard the foregoing uplink transmission data according to the second instruction information, which further avoids retransmitting the uplink transmission data.

In addition, after the uplink transmission data is sent as described above, if the positive acknowledgment information is received, it indicates that the base station has correctly received and demodulated the uplink transmission data; however, in another case, the base station may not correctly receive and demodulate the uplink transmission data, and the base station returns negative acknowledgment information. After performing step 201, the user equipment may further perform step 205, that is, when a downlink transmission time interval of the base station arrives, if negative acknowledgment information, for the uplink transmission data, sent by the base station is received, retransmit the uplink transmission data when an uplink transmission time interval of the user equipment arrives.

There is no absolute sequence relationship between step 203 and step 204, which may be performed simultaneously, or may be performed in sequence. What is shown in FIG. 4 is only a specific implementation manner thereof.

The following describes a data transmission method of an embodiment of the present invention by using a specific embodiment. The method in this embodiment is applied to a heterogeneous network (Heterogeneous and network, HetNet). The heterogeneous network includes a micro base station and a macro base station. If time frequencies of the two base stations are aligned, resources for sending and receiving data are consistent.

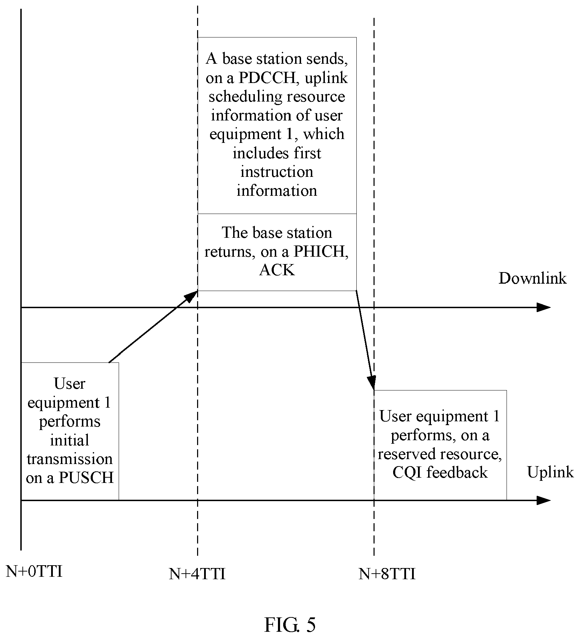

Referring to FIG. 5, for any base station in the heterogeneous network, when the N+0TTI (N is greater than or equal to 0) arrives, user equipment 1 performs initial transmission, that is, sends uplink transmission data, on a PUSCH, and simultaneously, the base station receives the uplink transmission data sent by the user equipment 1 at the N+0TTI.

If the base station has correctly received and demodulated the uplink transmission data, when the N+4TTI arrives, the base station returns, on a PHICH, ACK information, and simultaneously returns, on a PDCCH, uplink scheduling resource information allocated for the user equipment 1, where the uplink scheduling resource information includes the foregoing first instruction information, which indicates that the user equipment 1 can send, on a reserved resource, only CQI measurement information, and the PDCCH further carries second instruction information (not shown in FIG. 5). The second instruction information gives an instruction by inverting an NDI value in UL-Grant information, and the first instruction information gives an instruction by using a CQI request information element in the UL-Grant information. In addition, the user equipment 1 receives information on the PDCCH and the PHICH at the N+4TTI.

When the N+8TTI arrives, the user equipment 1 sends, on a reserved resource, CQI measurement information according to the first instruction information, and if the NDI value in UL-Grant of the PDCCH is inverted, the user equipment 1 discards the uplink transmission data. In this way, even if the user equipment 1 incorrectly demodulates the information on the PHICH into ACK information, the user equipment 1 does not perform retransmission, which does not cause interference to uplink transmission data sending of another user equipment.

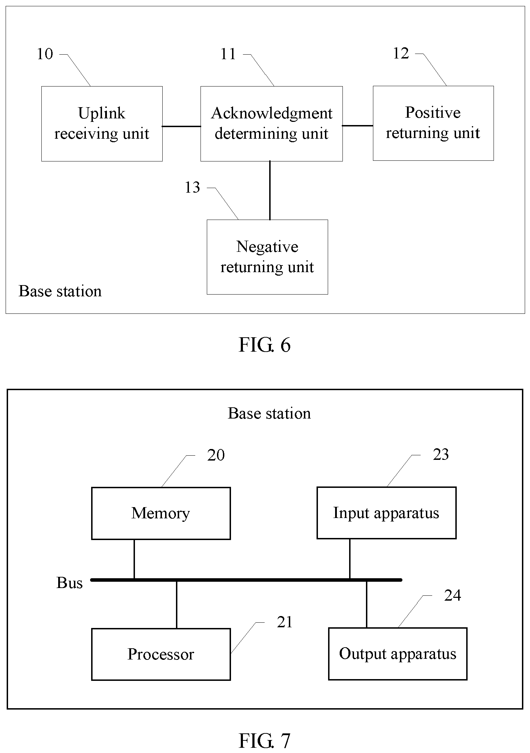

An embodiment of the present invention provides a base station. Data transmission may be performed between units in the base station in this embodiment of the present invention according to the method shown in FIG. 1 or FIG. 2, and a schematic structural diagram is shown in FIG. 6, including:
an uplink receiving unit 10, configured to receive uplink transmission data sent by user equipment;
an acknowledgment determining unit 11, configured to determine acknowledgment information, for the uplink transmission data, of the uplink receiving unit 10; and
a positive returning unit 12, configured to: when the acknowledgment determining unit 11 determines that the acknowledgment information for the uplink transmission data is positive acknowledgment information, when a downlink transmission time interval arrives, send the positive acknowledgment information and uplink scheduling resource information to the user equipment, where the uplink scheduling resource information includes first instruction information, which is used to instruct the user equipment to send, on a reserved resource of an uplink scheduling resource, channel quality indicator measurement information.

Further, the uplink scheduling resource information sent by the positive returning unit 12 further includes second instruction information, where the second instruction information is used to instruct the user equipment to perform new uplink transmission, so that the user equipment discards the uplink transmission data according to the second instruction information.

In addition, the positive returning unit 12 adds the positive acknowledgment information or negative acknowledgment information on a physical hybrid automatic repeat request indicator channel (PHICH), and adds the first instruction information and the second instruction information to uplink grant information of a physical downlink control channel (PDCCH), where an instruction is given by inverting an NDI value in the uplink grant information.

In addition, the base station in this embodiment may further includes a negative returning unit 13, configured to: if the acknowledgment determining unit 11 determines that the acknowledgment information for the uplink transmission data is negative acknowledgment information, when a downlink transmission time interval arrives, send the negative acknowledgment information to the user equipment, so that the user equipment retransmits the uplink transmission data. In addition, the negative returning unit 13 may further perform configuration that another user equipment does not send uplink transmission data at a retransmission TTI of the user equipment, and sends the configuration to the another user equipment over the PDCCH, which can also avoid causing interference.

It should be noted that the positive returning unit 12 may add both the first instruction information and the second instruction information to the UL-Grant information of the PDCCH. Because the existing UL-Grant information already includes an NDI information element and a CQI request information element, the positive returning unit 12 may send the uplink scheduling resource information to the user equipment by directly delivering the UL-Grant information that requests the user equipment to report a CQI, without modifying a message format of an existing protocol. In addition, the base station may further include a policy presetting unit, configured to restrain the base station from decoding information (that is, the channel quality indicator measurement information) sent by the user equipment and received on the reserved resource of the uplink scheduling resource of the user equipment.

According to the base station in this embodiment of the present invention, when an uplink receiving unit 10 receives uplink transmission data sent by user equipment, an acknowledgment determining unit 11 determines acknowledgment information for the uplink transmission data; and if the acknowledgment information for the uplink transmission data is positive acknowledgment information, when a downlink transmission time interval of the base station arrives, a positive returning unit 12 sends the positive acknowledgment information and uplink scheduling resource information to the user equipment, where the uplink scheduling resource information includes first instruction information, which is used to instruct the user equipment to send, on a reserved resource of an uplink scheduling resource, channel quality indicator measurement information. In this way, if the user equipment obtains, by incorrect demodulation, negative acknowledgment information instead of the positive acknowledgment information, the user equipment sends, on the reserved resource, the CQI measurement information according to the first instruction information, but does not retransmit the uplink transmission data, which reduces interference caused to uplink transmission data sending of user equipment in another cell, and improves efficiency of normal data sending of the user equipment.

An embodiment of the present invention provides a base station. Data transmission may be performed between units in the base station in this embodiment of the present invention according to the method shown in FIG. 1 or FIG. 2, and a schematic structural diagram is shown in FIG. 7, including: a memory 20, a processor 21, an input apparatus 23, and an output apparatus 24 that are separately connected to a bus.

The memory 20 is configured to store data entered through the input apparatus 23 and may further store information such as a necessary file for processing data by the processor 21; the input apparatus 23 and the output apparatus 24 include a port by using which the base station communicates with another device, and may further include an external device, such as a display, a keyboard, a mouse, or a printer, of the base station.

The processor 21 is configured to: after the input apparatus 23 receives uplink transmission data sent by user equipment, determine acknowledgment information for the uplink transmission data; and if the acknowledgment information for the uplink transmission data is positive acknowledgment information, when a downlink transmission time interval arrives, control the output apparatus 24 to send the positive acknowledgment information and uplink scheduling resource information to the user equipment, where the uplink scheduling resource information includes first instruction information, which is used to instruct the user equipment to send, on a reserved resource of an uplink scheduling resource, channel quality indicator measurement information. Further, the processor 21 is further configured to control the output apparatus 24 to further add second instruction information to the sent uplink scheduling resource information, where the second instruction information is used to instruct the user equipment to perform new uplink transmission, so that the user equipment discards the uplink transmission data according to the second instruction information.

Specifically, the processor 21 adds the positive acknowledgment information or negative acknowledgment information on a physical hybrid automatic repeat request indicator channel (PHICH), and adds the first instruction information and the second instruction information to uplink grant information of a physical downlink control channel (PDCCH), where an instruction is given by inverting an NDI value in the uplink grant information.

In addition, in the base station in this embodiment, the processor 21 may be further configured to: if it is determined that the acknowledgment information for the uplink transmission data is negative acknowledgment information, control the output apparatus 24 to send the negative acknowledgment information to the user equipment when a downlink transmission time interval arrives, so that the user equipment retransmits the uplink transmission data. In addition, the processor 21 may further perform configuration that another user equipment does not send uplink transmission data at a retransmission TTI of the user equipment, and adds the configuration on the PDCCH and controls the output apparatus 24 to send the configuration to the another user equipment, which can also avoid causing interference.

It should be noted that the processor 21 may further restrain the input apparatus of the base station from decoding information (that is, the channel quality indicator measurement information) sent by the user equipment and received on the reserved resource of the uplink scheduling resource of the user equipment.

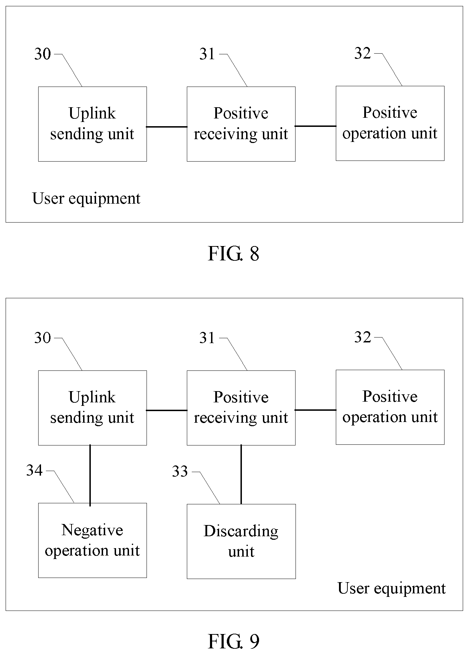

An embodiment of the present invention provides user equipment. Data transmission may be performed between units in the user equipment in this embodiment of the present invention according to the method shown in FIG. 3 or FIG. 4, and a schematic structural diagram is shown in FIG. 8, including:
an uplink sending unit 30, configured to send uplink transmission data to a base station;
a positive receiving unit 31, configured to: when a downlink transmission time interval of the base station arrives, receive positive acknowledgment information, which is for the uplink transmission data sent by the uplink sending unit 30, and uplink scheduling resource information that are sent by the base station, where the uplink scheduling resource information includes first instruction information, which is used to instruct the user equipment to send, on a reserved resource of an uplink scheduling resource, channel quality indicator measurement information; and
a positive operation unit 32, configured to: when an uplink transmission time interval of the user equipment arrives, send, on the reserved resource, the channel quality indicator measurement information according to the first instruction information in the uplink scheduling resource information received by the positive receiving unit 31.

According to the user equipment of this embodiment of the present invention, an uplink sending unit 30 sends uplink transmission data to a base station; when a downlink transmission time interval of the base station arrives, a positive receiving unit 31 receives positive acknowledgment information, which is for the uplink transmission data, and uplink scheduling resource information that are sent by the base station; when an uplink transmission time interval of the user equipment arrives, a positive operation unit 32 sends, on a reserved resource, channel quality indicator measurement information according to first instruction information included in the uplink scheduling resource information. In this way, if the user equipment obtains, by incorrect demodulation, negative acknowledgment information instead of the positive acknowledgment information, the user equipment sends, only on the reserved resource, the CQI measurement information according to the first instruction information, but does not retransmit the uplink transmission data, which reduces interference caused to uplink transmission data sending of user equipment in another cell, and improves efficiency of normal data sending of the user equipment.

Referring to FIG. 9, in a specific embodiment, the user equipment may not only include the structure shown in FIG. 8, but also include a discarding unit 33 and a negative operation unit 34.

The discarding unit 33 is configured to: when the uplink scheduling resource information received by the positive receiving unit 31 further includes second instruction information used to instruct the user equipment to perform new uplink transmission, discard the uplink transmission data according to the second instruction information.

The negative operation unit 34 is configured to: if the downlink transmission time interval of the base station arrives, receive negative acknowledgment information, for the uplink transmission data sent by the uplink sending unit 30, sent by the base station, and when the uplink transmission time interval of the user equipment arrives, retransmit the uplink transmission data. If the negative operation unit 34 obtains, by incorrect demodulation, positive acknowledgment information, instead of the negative acknowledgment information, the negative operation unit 34 neither retransmits the uplink transmission data nor discards the uplink transmission data.

In the user equipment in this embodiment, regardless of whether the positive receiving unit 31 obtains the positive acknowledgment information by correct demodulation, the positive operation unit 32 sends, on the reserved resource, the CQI measurement information. Further, if the uplink scheduling resource information received by the positive receiving unit 31 includes the second instruction information, the discarding unit 33 discards the uplink transmission data. In addition, the positive receiving unit 31 is specifically configured to: when the downlink transmission time interval of the base station arrives, receive information on a physical hybrid automatic repeat request indicator channel (PHICH), and obtain the positive acknowledgment information by demodulation; and receive information on a physical downlink control channel (PDCCH), and obtain the uplink scheduling resource information by demodulation, where the first instruction information and the second instruction information are in uplink grant information.

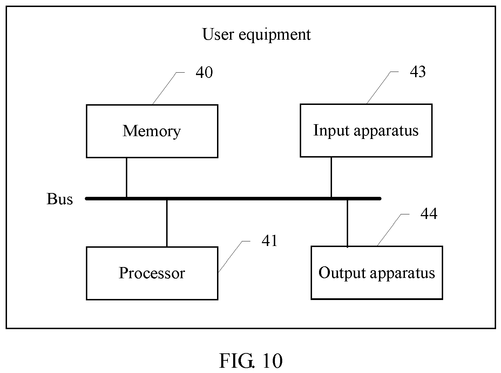

An embodiment of the present invention provides another user equipment. Data transmission may be performed between units in the user equipment in this embodiment of the present invention according to the method shown in FIG. 3 or FIG. 4, and a schematic structural diagram is shown in FIG. 10, including: a memory 40, a processor 41, an input apparatus 43, and an output apparatus 44 that are separately connected to a bus.

The memory 40 is configured to store data entered through the input apparatus 43 and may further store information such as a necessary file for processing data by the processor 41; the input apparatus 43 and the output apparatus 44 include a port by using which the user equipment communicates with another device, and may further include an external device, such as a display, a keyboard, a mouse, or a printer, of the user equipment.

The processor 41 is configured to control the output apparatus 44 to send uplink transmission data to a base station; when a downlink transmission time interval of the base station arrives, the input apparatus 43 receives positive acknowledgment information, which is for the uplink transmission data, and uplink scheduling resource information that are sent by the base station, where the uplink scheduling resource information includes first instruction information, which is used to instruct the user equipment to send, on a reserved resource of an uplink scheduling resource, channel quality indicator measurement information; when an uplink transmission time interval of the user equipment arrives, the processor 41 controls the output apparatus 44 to send, on the reserved resource, the channel quality indicator measurement information according to the first instruction information in the uplink scheduling resource information.

In a specific embodiment, regardless of whether the processor 41 obtains the positive acknowledgment information by correct demodulation, the processor 41 controls the output apparatus 44 to send, on the reserved resource, the CQI measurement information. Further, the uplink scheduling resource information received by the input apparatus 43 includes second instruction information, which is used to instruct the user equipment to perform new uplink transmission, and the processor 41 discards the uplink transmission data according to the second instruction information. In addition, when the downlink transmission time interval of the base station arrives, the input apparatus 43 of the user equipment receives information on a physical hybrid automatic repeat request indicator channel (PHICH), and the processor 41 may obtain the positive acknowledgment information by demodulating the information on the PHICH; simultaneously, the input apparatus 43 receives information on a physical downlink control channel (PDCCH), and the processor 41 may obtain the uplink scheduling resource information by demodulating the information on the PDCCH, where the first instruction information and the second instruction information are in uplink grant information.

If the input apparatus 43 receives, when the downlink transmission time interval of the base station arrives, negative acknowledgment information, for the uplink transmission data, sent by the base station, the processor 41 controls, when the uplink transmission time interval of the user equipment arrives, the output apparatus 44 to retransmit the uplink transmission data. If obtaining positive acknowledgment information instead of the negative acknowledgment information by incorrect demodulation, the processor 41 does not control the output apparatus 44 to retransmit the uplink transmission data, but does not discard the uplink transmission data, either.

An embodiment of the present invention further provides a data transmission system, including user equipment and a base station, where a structure of the base station is similar to a structure of the base station in the embodiment in FIG. 6, and a structure of the user equipment is similar to a structure of the user equipment in the embodiment in FIG. 8 or FIG. 9, and details are not described herein again.

An embodiment of the present invention further provides a data transmission system, including user equipment and a base station, where a structure of the base station is similar to a structure of the base station in the embodiment in FIG. 7, and a structure of the user equipment is similar to a structure of the user equipment in the embodiment in FIG. 8 or FIG. 10, and details are not described herein again.

A person of ordinary skill in the art may understand that all or a part of the steps of the methods in the embodiments may be implemented by a program instructing relevant hardware. The program may be stored in a computer readable storage medium. The storage medium may include: a ROM, a RAM, a magnetic disk, or an optical disc.

The foregoing gives detailed descriptions on a service processing method, a system, and a device provided by embodiments of the present invention. In this specification, specific examples are used to describe the principle and implementation manners of the present invention, and the description of the embodiments is only intended to help understand the method and core idea of the present invention. Meanwhile, a person of ordinary skill in the art may, based on the idea of the present invention, make modifications with respect to the specific implementation manners and the application scope. Therefore, the content of this specification shall not be construed as a limitation to the present invention.

## Claims

1. A data transmission method, comprising:
receiving (101), by a base station, uplink transmission data sent by user equipment;
determining (102), by the base station, acknowledgment information for the uplink transmission data; and
when the acknowledgment information for the uplink transmission data is positive acknowledgment information, sending (103), by the base station when a downlink transmission time interval arrives, the positive acknowledgment information and uplink scheduling resource information to the user equipment, wherein
the uplink scheduling resource information comprises first instruction information, which is used to instruct the user equipment to send, on a reserved resource of the uplink scheduling resource, channel quality indicator measurement information.

2. The method according to claim 1, wherein:
the uplink scheduling resource information further comprises second instruction information, which is used to instruct the user equipment to perform new uplink transmission, so that the user equipment discards the uplink transmission data according to the second instruction information.

3. A data transmission method, comprising:
sending (201), by user equipment, uplink transmission data to a base station;
receiving (202), by the user equipment, acknowledgment information, which is for the uplink transmission data, and uplink scheduling resource information that are sent by the base station, wherein the acknowledgment information is positive acknowledgment information sent by the base station, and is parsed by the user equipment into positive acknowledgment information or negative acknowledgment information, and the uplink scheduling resource information comprises first instruction information, which is used to instruct the user equipment to send, on a reserved resource of the uplink scheduling resource, channel quality indicator measurement information; and
when an uplink transmission time interval of the user equipment arrives, sending (203), on the reserved resource, the channel quality indicator measurement information according to the first instruction information.

4. The method according to claim 3, wherein the uplink scheduling resource information further comprises second instruction information, which is used to instruct the user equipment to perform new uplink transmission, and the method further comprises:
discarding the uplink transmission data according to the second instruction information.

5. The method according to claim 3 or 4, wherein the reserved resource is on an edge of a frequency band occupied by a physical uplink shared channel, PUSCH.

6. Abase station, comprising:
an uplink receiving unit (10), configured to receive uplink transmission data sent by user equipment;
an acknowledgment determining unit (11), configured to determine acknowledgment information, for the uplink transmission data, of the uplink receiving unit; and
a positive returning unit (12), configured to: when the acknowledgment determining unit determines that the acknowledgment information for the uplink transmission data is positive acknowledgment information, send, when a downlink transmission time interval arrives, the positive acknowledgment information and uplink scheduling resource information to the user equipment, wherein
the uplink scheduling resource information comprises first instruction information, which is used to instruct the user equipment to send, on a reserved resource of the uplink scheduling resource, channel quality indicator measurement information.

7. The base station according to claim 6, wherein
the uplink scheduling resource information further comprises second instruction information, which is used to instruct the user equipment to perform new uplink transmission, so that the user equipment discards the uplink transmission data according to the second instruction information.

8. The base station according to claim 6 or 7, wherein the reserved resource is on an edge of a frequency band occupied by a physical uplink shared channel PUSCH.

9. The base station according to any one of claims 6 to 8, wherein the reserved resource occupies one resource block.

10. The base station according to any one of claims 6 to 9, wherein the reserved resource is the same for different user equipments.

11. User equipment, comprising:
an uplink sending unit (30), configured to send uplink transmission data to a base station;
a positive receiving unit (31), configured to receive acknowledgment information, which is for the uplink transmission data, and uplink scheduling resource information that are sent by the base station, wherein the acknowledgment information is positive acknowledgment information sent by the base station, and is parsed by the user equipment into positive acknowledgment information or negative acknowledgment information, and the uplink scheduling resource information comprises first instruction information, which is used to instruct the user equipment to send, on a reserved resource of the uplink scheduling resource, channel quality indicator measurement information; and
a positive operation unit (32), configured to: when an uplink transmission time interval of the user equipment arrives, send, on the reserved resource, the channel quality indicator measurement information according to the first instruction information in the uplink scheduling resource information received by the positive receiving unit.

12. The user equipment according to claim 11, wherein the uplink scheduling resource information further comprises second instruction information, which is used to instruct the user equipment to perform new uplink transmission, and the user equipment further comprises:
a discarding unit, configured to discard the uplink transmission data according to the second instruction information.

13. The user equipment according to claim 11 or 12, wherein the reserved resource is on an edge of a frequency band occupied by a physical uplink shared channel PUSCH.

14. The user equipment according to any one of claims 11 to 13, wherein the reserved resource occupies one resource block.

15. The user equipment according to any one of claims 11 to 14, wherein the reserved resource is the same for different user equipments.

## Patentansprüche

1. Datenübertragungsverfahren, umfassend:
Empfangen (101), durch eine Basisstation, von Aufwärtsstrecken-Übertragungsdaten, die von Benutzer-Equipment gesendet wurden;
Bestimmen (102), durch die Basisstation, von Bestätigungsinformationen für die Aufwärtsstrecken-Übertragungsdaten; und
wenn es sich bei den Bestätigungsinformationen für die Aufwärtsstrecken-Übertragungsdaten um positive Bestätigungsinformationen handelt, Senden (103), durch die Basisstation, wenn ein Abwärtsstrecken-Übertragungszeitintervall erreicht ist, der positiven Bestätigungsinformationen und Informationen zu Aufwärtsstrecken-Zeitplanungsressourcen an das Benutzer-Equipment, wobei
die Informationen zu Aufwärtsstrecken-Zeitplanungsressourcen erste Anweisungsinformationen umfassen, die verwendet werden, um das Benutzer-Equipment anzuweisen, auf einer reservierten Ressource der Aufwärtsstrecken-Zeitplanungsressource Kanalqualitätsindikator-Messinformationen zu senden.

2. Verfahren nach Anspruch 1, wobei:
die Informationen zu Aufwärtsstrecken-Zeitplanungsressourcen ferner zweite Anweisungsinformationen umfassen, die verwendet werden, um das Benutzer-Equipment anzuweisen, eine neue Aufwärtsstreckenübertragung durchzuführen, so dass das Benutzer-Equipment die Aufwärtsstrecken-Übertragungsdaten gemäß den zweiten Anweisungsinformationen verwirft.

3. Datenübertragungsverfahren, umfassend:
Senden (201), durch Benutzer-Equipment, von Aufwärtsstrecken-Übertragungsdaten an eine Basisstation; Empfangen (202), durch das Benutzer-Equipment, von Bestätigungsinformationen für die Aufwärtsstrecken-Übertragungsdaten und Informationen zu Aufwärtsstrecken-Zeitplanungsressourcen, die von der Basisstation gesendet werden, wobei es sich bei den Bestätigungsinformationen um positive Bestätigungsinformationen handelt, die von der Basisstation gesendet werden und die vom Benutzer-Equipment in positive Bestätigungsinformationen oder negative Bestätigungsinformationen zerlegt werden, und die Informationen zu Aufwärtsstrecken-Zeitplanungsressourcen erste Anweisungsinformationen umfassen, die verwendet werden, um das Benutzer-Equipment anzuweisen, auf einer reservierten Ressource der Aufwärtsstrecken-Zeitplanungsressource Kanalqualitätsindikator-Messinformationen zu senden; und
wenn ein Aufwärtsstrecken-Übertragungszeitintervall des Benutzer-Equipments erreicht ist, Senden (203), auf der reservierten Ressource, der Kanalqualitätsindikator-Messinformationen gemäß den ersten Anweisungsinformationen.

4. Verfahren nach Anspruch 3, wobei die Informationen zu Aufwärtsstrecken-Zeitplanungsressourcen ferner zweite Anweisungsinformationen umfassen, die verwendet werden, um das Benutzer-Equipment anzuweisen, eine neue Aufwärtsstreckenübertragung durchzuführen, und das Verfahren ferner umfasst:
Verwerfen der Aufwärtsstrecken-Übertragungsdaten gemäß den zweiten Anweisungsinformationen.

5. Verfahren nach Anspruch 3 oder 4, wobei die reservierte Ressource am Rand eines Frequenzbands liegt, das durch einen gemeinsam genutzten physischen Aufwärtsstreckenkanal (Physical Uplink Shared Channel, PUSCH) belegt ist.

6. Basisstation, umfassend:
eine Aufwärtsstrecken-Empfangseinheit (10), die dafür ausgelegt ist, von Benutzer-Equipment gesendete Aufwärtsstrecken-Übertragungsdaten zu empfangen;
eine Bestätigungsbestimmungseinheit (11), die dafür ausgelegt ist, Bestätigungsinformationen für die Aufwärtsstrecken-Übertragungsdaten der Aufwärtsstrecken-Empfangseinheit zu bestimmen; und
eine positive Rücksendeeinheit (12), die dafür ausgelegt ist: Wenn die Bestätigungsbestimmungseinheit bestimmt, dass es sich bei den Bestätigungsinformationen für die Aufwärtsstrecken-Übertragungsdaten um positive Bestätigungsinformationen handelt, bei Erreichen eines Abwärtsstrecken-Übertragungszeitintervalls die positiven Bestätigungsinformationen und Informationen zu Aufwärtsstrecken-Zeitplanungsressourcen an das Benutzer-Equipment zu senden, wobei
die Informationen zu Aufwärtsstrecken-Zeitplanungsressourcen erste Anweisungsinformationen umfassen, die verwendet werden, um das Benutzer-Equipment anzuweisen, auf einer reservierten Ressource der Aufwärtsstrecken-Zeitplanungsressource Kanalqualitätsindikator-Messinformationen zu senden.

7. Basisstation nach Anspruch 6, wobei
die Informationen zu Aufwärtsstrecken-Zeitplanungsressourcen ferner zweite Anweisungsinformationen umfassen, die verwendet werden, um das Benutzer-Equipment anzuweisen, eine neue Aufwärtsstreckenübertragung durchzuführen, so dass das Benutzer-Equipment die Aufwärtsstrecken-Übertragungsdaten gemäß den zweiten Anweisungsinformationen verwirft.

8. Basisstation nach Anspruch 6 oder 7, wobei die reservierte Ressource am Rand eines Frequenzbands liegt, das durch einen gemeinsam genutzten physischen Aufwärtsstreckenkanal (Physical Uplink Shared Channel, PUSCH) belegt ist.

9. Basisstation nach einem der Ansprüche 6 bis 8, wobei die reservierte Ressource einen Ressourcenblock belegt.

10. Basisstation nach einem der Ansprüche 6 bis 9, wobei die reservierte Ressource dieselbe für unterschiedliche Benutzer-Equipments ist.

11. Benutzer-Equipment, umfassend:
eine Aufwärtsstrecken-Sendeeinheit (30), die dafür ausgelegt ist, Aufwärtsstrecken-Übertragungsdaten an eine Basisstation zu senden;
eine positive Empfangseinheit (31), die dafür ausgelegt ist, Bestätigungsinformationen für die Aufwärtsstrecken-Übertragungsdaten und Informationen zu Aufwärtsstrecken-Zeitplanungsressourcen, die von der Basisstation gesendet werden, zu empfangen, wobei es sich bei den Bestätigungsinformationen um positive Bestätigungsinformationen handelt, die von der Basisstation gesendet werden und die vom Benutzer-Equipment in positive Bestätigungsinformationen oder negative Bestätigungsinformationen zerlegt werden, und wobei die Informationen zu Aufwärtsstrecken-Zeitplanungsressourcen erste Anweisungsinformationen umfassen, die verwendet werden, um das Benutzer-Equipment anzuweisen, auf einer reservierten Ressource der Aufwärtsstrecken-Zeitplanungsressource Kanalqualitätsindikator-Messinformationen zu senden; und
eine positive Betriebseinheit (32), die dafür ausgelegt ist: wenn ein Aufwärtsstrecken-Übertragungszeitintervall des Benutzer-Equipments erreicht ist, auf der reservierten Ressource die Kanalqualitätsindikator-Messinformationen gemäß den ersten Anweisungsinformationen in den von der positiven Empfangseinheit empfangenen Informationen zu Aufwärtsstrecken-Zeitplanungsressourcen zu senden.

12. Benutzer-Equipment nach Anspruch 11, wobei die Informationen zu Aufwärtsstrecken-Zeitplanungsressourcen ferner zweite Anweisungsinformationen umfassen, die verwendet werden, um das Benutzer-Equipment anzuweisen, eine neue Aufwärtsstreckenübertragung durchzuführen, und das Benutzer-Equipment ferner umfasst:
eine Ausschlusseinheit, die dafür konfiguriert ist, die Aufwärtsstrecken-Übertragungsdaten gemäß den zweiten Anweisungsinformationen zu verwerfen.

13. Benutzer-Equipment nach Anspruch 11 oder 12, wobei die reservierte Ressource am Rand eines Frequenzbands liegt, das durch einen gemeinsam genutzten physischen Aufwärtsstreckenkanal (Physical Uplink Shared Channel, PUSCH) belegt ist.

14. Benutzer-Equipment nach einem der Ansprüche 11 bis 13, wobei die reservierte Ressource einen Ressourcenblock belegt.

15. Benutzer-Equipment nach einem der Ansprüche 11 bis 14, wobei die reservierte Ressource dieselbe für unterschiedliche Benutzer-Equipments ist.

## Revendications

1. Procédé de transmission de données, comprenant de :
recevoir (101), par une station de base, des données de transmission de liaison montante envoyées par un équipement d'utilisateur ;
déterminer (102), par la station de base, des informations d'accusé de réception pour les données de transmission de liaison montante ; et
lorsque les informations d'accusé de réception pour les données de transmission de liaison montante sont des informations d'accusé de réception positives, envoyer (103) par la station de base lorsqu'un intervalle de temps de transmission de liaison descendante arrive, les informations d'accusé de réception positives et des informations de ressource de programmation de liaison montante à l'équipement d'utilisateur, dans lequel
les informations de ressource de programmation de liaison montante comprennent de premières informations d'instructions, qui sont utilisées pour indiquer à l'équipement d'utilisateur d'envoyer, sur une ressource réservée de la ressource de programmation de liaison montante, des informations de mesure d'indicateur de qualité de canal.

2. Procédé selon la revendication 1, dans lequel :
les informations de ressource de programmation de liaison montante comprennent en outre de secondes informations d'instructions, qui sont utilisées pour ordonner à l'équipement d'utilisateur d'effectuer une nouvelle transmission de liaison montante, de sorte que l'équipement d'utilisateur rejette les données de transmission de liaison montante selon les secondes informations d'instruction.

3. Procédé de transmission de données, comprenant de :
envoyer (201), par un équipement d'utilisateur, des données de transmission de liaison montante à une station de base ;
recevoir (202), par l'équipement d'utilisateur, des informations d'accusé de réception, qui sont pour les données de transmission de liaison montante, et des informations de ressource de programmation de liaison montante qui sont envoyées par la station de base, dans lequel les informations d'accusé de réception sont des informations d'accusé de réception positives envoyées par la station de base, et sont analysées par l'équipement d'utilisateur en informations d'accusé de réception positives ou en informations d'accusé de réception négatives, et les informations de ressource de programmation de liaison montante comprennent de premières informations d'instructions qui sont utilisées pour ordonner à l'équipement d'utilisateur d'envoyer, sur une ressource réservée de la ressource de programmation de liaison montante, des informations de mesure d'indicateur de qualité de canal ; et
lorsqu'un intervalle de temps de transmission de liaison montante de l'équipement d'utilisateur arrive, envoyer (203), sur la ressource réservée, les informations de mesure d'indicateur de qualité de canal selon les premières informations d'instructions.

4. Procédé selon la revendication 3, dans lequel les informations de ressource de programmation de liaison montante comprennent en outre de secondes informations d'instructions, qui sont utilisées pour ordonner à l'équipement d'utilisateur d'effectuer une nouvelle transmission de liaison montante, et le procédé comprend en outre de :
rejeter les données de transmission de liaison montante selon les secondes informations d'instructions.

5. Procédé selon la revendication 3 ou 4, dans lequel la ressource réservée est sur un bord d'une bande de fréquence occupée par un canal partagé de liaison montante physique, PUSCH.

6. Station de base, comprenant :
une unité de réception de liaison montante (10), configurée pour recevoir des données de transmission de liaison montante envoyées par un équipement d'utilisateur ;
une unité de détermination d'accusé de réception (11), configurée pour déterminer des informations d'accusé de réception, pour les données de transmission de liaison montante, de l'unité de réception de liaison montante ; et
une unité de retour positif (12), configurée pour : lorsque l'unité de détermination d'accusé de réception détermine que les informations d'accusé de réception pour les données de transmission de liaison montante sont des informations d'accusé de réception positives, envoyer, lorsqu'un intervalle de temps de transmission de liaison descendante arrive, les informations d'accusé de réception positives et des informations de ressource de programmation de liaison montante à l'équipement d'utilisateur, dans lequel
les informations de ressource de programmation de liaison montante comprennent de premières informations d'instructions, qui sont utilisées pour ordonner à l'équipement d'utilisateur d'envoyer, sur une ressource réservée de la ressource de programmation de liaison montante, des informations de mesure d'indicateur de qualité de canal.

7. Station de base selon la revendication 6, dans laquelle
les informations de ressource de programmation de liaison montante comprennent en outre de secondes informations d'instructions, qui sont utilisées pour ordonner à l'équipement d'utilisateur d'effectuer une nouvelle transmission de liaison montante, de sorte que l'équipement d'utilisateur rejette les données de transmission de liaison montante selon les secondes informations d'instructions.

8. Station de base selon la revendication 6 ou 7, dans laquelle la ressource réservée est sur un bord d'une bande de fréquence occupée par un canal partagé de liaison montante physique, PUSCH.

9. Station de base selon l'une quelconque des revendications 6 à 8, dans laquelle la ressource réservée occupe un bloc de ressources.

10. Station de base selon l'une quelconque des revendications 6 à 9, dans laquelle la ressource réservée est la même pour différents équipements d'utilisateur.

11. Équipement d'utilisateur, comprenant :
une unité d'envoi de liaison montante (30), configurée pour envoyer des données de transmission de liaison montante à une station de base ;
une unité de réception positive (31), configurée pour recevoir des informations d'accusé de réception, qui sont pour les données de transmission de liaison montante, et des informations de ressource de programmation de liaison montante qui sont envoyées par la station de base, dans lequel les informations d'accusé de réception sont des informations d'accusé de réception positives envoyées par la station de base, et sont analysées par l'équipement d'utilisateur en informations d'accusé de réception positives ou en informations d'accusé de réception négatives, et les informations de ressource de programmation de liaison montante comprennent de premières informations d'instructions, qui sont utilisées pour ordonner à l'équipement d'utilisateur d'envoyer, sur une ressource réservée de la ressource de programmation de liaison montante, des informations de mesure d'indicateur de qualité de canal ; et
une unité de fonctionnement positif (32) configurée pour : lorsqu'un intervalle de temps de transmission de liaison montante de l'équipement d'utilisateur arrive, envoyer, sur la ressource réservée, les informations de mesure d'indicateur de qualité de canal selon les premières informations d'instructions dans les informations de ressource de programmation de liaison montante reçues par l'unité de réception positive.

12. Équipement d'utilisateur selon la revendication 11, dans lequel les informations de ressource de programmation de liaison montante comprennent en outre de secondes informations d'instructions, qui sont utilisées pour ordonner à l'équipement d'utilisateur d'effectuer une nouvelle transmission de liaison montante, et l'équipement d'utilisateur comprend en outre :
une unité de rejet, configurée pour rejeter les données de transmission de liaison montante selon les secondes informations d'instructions.

13. Équipement d'utilisateur selon la revendication 11 ou 12, dans lequel la ressource réservée est sur un bord d'une bande de fréquence occupée par un canal partagé de liaison montante physique, PUSCH.

14. Équipement d'utilisateur selon l'une quelconque des revendications 11 à 13, dans lequel la ressource réservée occupe un bloc de ressources.

15. Équipement d'utilisateur selon l'une quelconque des revendications 11 à 14, dans lequel la ressource réservée est la même pour différents équipements d'utilisateur.
